# EUROPEAN PATENT SPECIFICATION

(11) **EP 3 216 352 B1**
(45) Date of publication and mention of the grant of the patent: **20.12.2023**
(21) Application number: 16159983.2
(22) Date of filing: 11.03.2016
(51) Int. Cl.: A23L 3/36, A23B 4/06, A22C 9/00, F25D 13/06, A23B 4/08, A23L 3/375

(54) **COOLING DEVICE AND METHOD FOR COOLING POURABLE ITEMS**
KÜHLVORRICHTUNG UND VERFAHREN ZUM KÜHLEN VON RIESELFÄHIGEN ELEMENTEN
DISPOSITIF DE REFROIDISSEMENT ET PROCÉDÉ POUR REFROIDIR DES ARTICLES EN VRAC

(43) Date of publication of application: 13.09.2017
(73) Proprietor: Air Liquide Deutschland GmbH, 40476 Düsseldorf (DE); L'AIR LIQUIDE, Société Anonyme pour l'Etude et l'Exploitation des Procédés Georges Claude, 75007 Paris (FR)
(72) Inventor: Angenheister de Freitas, Alexander, 41460 Neuss (DE)
(74) Representative: Keenway Patentanwälte Neumann Heine Taruttis

(56) References cited:
- EP-A1- 1 704 783
- WO-A1-2004/017000
- WO-A1-2008/106454
- US-A- 5 752 431

## Description

The present invention is directed to a cooling device and a method for cooling pourable items, in particular food items, on an industrial scale inside a rotary tumbler.

Devices for cooling or freezing food or edible goods are known. For example, WO 2004/017000 A1 discloses a cruster apparatus for surface crust freezing of a food product, that comprises an impingement shell with holes through which a cooling medium can penetrate. In further prior approaches, pourable items can be cooled or frozen while being moved through a cylindrical tumbler. Thereby, a cooling effect can be obtained, e. g., with a refrigerant such as nitrogen or carbon dioxide. The refrigerant can be introduced into the tumbler either directly or, alternatively, through a perforated tumbler wall. In the latter case the refrigerant can evaporate or sublimate outside the tumbler. Fans can cause it to penetrate through the perforated wall into the tumbler. The motion of the items through the tumbler along its axis can be achieved, e.g., with an auger inside the tumbler. Alternatively or additionally, the tumbler can be tilted. In that case, gravity can cause the items to move through the tumbler. EP 1 704783 A1 relates to a combination of a cooker and a cooler with two rotary drums.

According to prior art, two approaches can be used for adjusting a flow of the refrigerant into the rotary tumbler. First, a pre-spray bar for spraying a refrigerant into the rotary tumbler can be added, for example, near the food inlet. Such a pre-spray bar may lead to an increased cooling rate in a locally restricted part of the tumbler. Second, if more than one fan is used for propelling the refrigerant, the speed of each fan can be tuned individually. Thereby, the amount of the refrigerant entering the tumbler can be varied locally. However, these possibilities of adjusting the refrigerant flow into the rotary tumbler are not sufficient for all applications. In particular, those pourable items that require a cooling in two steps at two different cooling rates may require enhanced spatial adjustment of the cooling rates.

It is, therefore, on object of the present invention to overcome at least in part the disadvantages known from prior art, and, in particular, to provide a method and a cooling device for cooling pourable items at a multitude of successively applied cooling rates.

These objects are solved by the features of the independent claims. Dependent claims are directed to preferred embodiments of the present invention.

The cooling device according to the present invention for cooling pourable items comprises a rotary tumbler having an inlet, an outlet, an axis and a circumferential wall. At least a part of the circumferential wall has perforation openings for penetration of a refrigerant. The rotary tumbler is divided into
- at least one first cooling zone, wherein the circumferential wall in the first cooling zone has a first penetrability for the refrigerant, and
- at least one second cooling zone, wherein the circumferential wall in the second cooling zone has a second penetrability for the refrigerant, which is different from the first penetrability for the refrigerant.

The cooling device is preferably an installation for industrial mass production of food products. Any food products comprising pourable items may be chilled, cooled or frozen using the cooling device. In particular, this is advantageous for heat-sensitive or perishable products. Pourable items are objects with a solid bulk, a multitude of which can be processed simultaneously. Examples can be noodles, meat balls, fries or vegetables. Also, these pourable items may be coated, for example, by a sauce. Preferably, the rotary tumbler is not only arranged for cooling, but also for coating the pourable items. A multitude of the pourable items forms a food product, e.g. a bag of noodles. Cooling the pourable items is preferably performed by moving them through the rotary tumbler. The rotary tumbler preferably has a rotationally symmetric shape, in particular a cylindrical shape. At a first side, which is a first front side of the cylinder, the pourable items can be introduced into the rotary tumbler through the inlet. At a second front side of the rotary tumbler, the pourable items can be extracted from the rotary tumbler through the outlet. In the case of a cylindrical rotary tumbler, the axis is a cylinder axis as defined in a mathematical sense. In a preferred orientation of the rotary tumbler, the axis is oriented horizontally. Pourable items that are moved through the rotary tumbler along its axis can be cooled by a refrigerant. The refrigerant is preferably nitrogen and/or carbon dioxide. Hence, all elements that may be contacted by the refrigerant (or that can become cold otherwise) are preferably made of a material that can withstand the relevant low temperatures. In particular, the rotary tumbler is preferably made of a metal, in particular stainless steel. For example, liquid nitrogen has a temperature of 77 K [Kelvin] and liquid carbon dioxide of 194 K. The refrigerant is preferably provided in a liquid form. It can either evaporate outside the rotary tumbler and enter the rotary tumbler through the perforation openings of the circumferential wall, or it can be injected into the rotary tumbler directly and evaporate within the rotary tumbler. Preferably, the perforation openings are adapted to the size, the weight and/or other properties of the pourable items. It is preferably ensured that the pourable items cannot fall through the perforation openings. The perforation openings are preferably arranged uniformly, i.e. with constant spacings in between adjacent perforation openings. The perforation openings preferably have, e.g., a circular, an elliptical or an L-shape. It is preferred that a multitude of the perforation openings has the same shape, in particular that all perforation openings of the first cooling zone have the same shape and that all of the perforation openings of the second cooling zone have the same shape.

The penetrability for the refrigerant is a measure for an amount of the refrigerant that may penetrate the rotary tumbler through the perforation openings (provided comparable conditions, in particular regarding a pressure and/or a refrigerant flow outside the circumferential wall). Larger and/or more perforation openings provide a higher penetrability for the refrigerant. A reduced size of the perforation openings can lead to an increased flow rate, because the same amount of the refrigerant has to flow through a smaller cross section area. Such an increased flow rate is advantageous for mixing the pourable items. In combination with the amount of the refrigerant that is provided, the cooling rate is influenced by the penetrability for the refrigerant.

The cooling rates in the first cooling zone and in the second cooling zone are different as are the first and the second penetrability for the refrigerant. This way, the rotary tumbler may be adapted to requirements of the pourable items with respect to cooling rates. In particular, a cooling at two different cooling rates is achieved in the cooling device. In addition to the previously introduced possibilities of adjustment of the cooling rates, namely fan speeds and spray bar(s), the variation of the penetrability for the refrigerant and the coinciding variation of the cooling rates can enhance the adaptability of the cooling device to its intended purpose. Further, the first and second cooling rates may be significantly different. As the difference in the cooling rates is caused by the construction of the rotary tumbler, the transition between the first and second cooling rates can be sharp, even if the first and second cooling rates are significantly different. For example, a flash freezing as a first step is used to freeze liquid components of the pourable items, in particular a liquid coating, where a lower second cooling rate is applied for gently achieving a low core temperature of the pourable items.

Preferably, the cooling device is constructed for a certain kind of pourable item with certain temperature requirements, i.e. a particular cooling device may be designed to cool, e.g., noodles, while a different cooling device with different design details can be used to cool meat balls. As the invention is directed to mass production of food products, this does not limit the flexibility significantly.

In a preferred embodiment of the cooling device, the circumferential wall has a closed surface in the first cooling zone.

The closed surface is deemed to have a penetrability for the refrigerant of 0. This means, no refrigerant may enter the rotary tumbler through the closed surface of the circumferential wall in the first cooling zone. This embodiment of the cooling device is preferably used for moist, wet, or coated pourable items. Due to the closed surface in the first cooling zone, any liquid component of or on the pourable items can be frozen prior to proceeding to the second cooling zone, where the circumferential wall has perforation openings. Perforation openings in the first cooling zone would be disadvantageous for such pourable items with a liquid component. If the rotary tumbler is rotated, the refrigerant can cover the inside of the closed surface uniformly. This may prevent an adhesion of the pourable items to the closed surface of the circumferential wall. Further, evaporated refrigerant gas can mix the pourable items and prevent them from blocking or adhering to each other.

In a further preferred embodiment of the cooling device the circumferential wall has structure elements on an inside surface in the first cooling zone.

Structure elements on the inside surface of the rotary tumbler ensure that the pourable items are mixed while being moved through the rotary tumbler and, hence, are cooled uniformly. In particular, the structure elements are useful in those parts of the rotary tumbler that do not comprise perforation openings. There, only a low mixing of the pourable items can be obtained by a refrigerant flowing through them. The structure elements preferably are realized as rips, hooks, nodges and/or grooves that jointly form a tread of the inside surface of the rotary tumbler. Preferably, the size of the structure elements is adapted to the size of the pourable items. In particular, the structure elements are preferably of a size equal to an average size of the pourable items.

In a further preferred embodiment of the cooling device the circumferential wall has a first perforation density in the first cooling zone and a second perforation density in the second cooling zone, which is different from the first perforation density.

In this embodiment the first penetrability for the refrigerant and the second penetrability for the refrigerant are obtained by having the first cooling zone provided with a first perforation density and the second cooling zone with a second perforation density, respectively. The perforation density is defined as the ratio between an area of the perforation openings and a total area of the respective fraction of the circumferential wall. That is, for an example with a specific number of large perforation openings per surface area the perforation density is higher than for an example with the same specific number of small perforation openings per same surface area. Preferably, the perforation density is in the range of 0.3 to 0.7, in particular in the range of 0.4 to 0.6.

In a further preferred embodiment of the cooling device at least one of the perforation openings has an opening axis, which is aligned perpendicularly to the circumferential wall.

As the circumferential wall has a thickness, the perforation openings are not only two-dimensional surface patterns, but also have a three-dimensional shape. Preferably, the perforation openings are cylindrical holes in the circumferential wall. In a manufacturing process, these cylindrical holes can be created, e.g., by drilling them into the circumferential wall. For perforation openings having a shape an axis is defined for in a mathematical sense, this mathematical axis is the opening axis. For all other perforation openings, the opening axis is defined analogously. It is preferred that the opening axis is aligned perpendicularly to the circumferential wall for a majority of the perforation openings, in particular for all of the perforation openings. The refrigerant flow through the perforation openings can be influenced by the alignment of the opening axis of the perforation openings. The perforation openings can be regarded as nozzles for the refrigerant. Perforation openings with an opening axis aligned perpendicularly to the circumferential wall result in a refrigerant flow directed radially inward into the rotary tumbler. This way, a cooling rate for pourable items in the center of the rotary tumbler can be achieved, which is nearly the same as for pourable items closer to the circumferential wall. With this embodiment, a large amount of pourable items can be cooled at the same time at a similar cooling rate, i.e. a high filling of the rotary tumbler is possible.

In a further preferred embodiment of the cooling device at least one of the perforation openings has an opening axis, which is aligned obliquely to the circumferential wall.

The fact that the opening axis is aligned obliquely to the circumferential wall is equivalent to the opening axis not being aligned perpendicularly to the circumferential wall, i.e. the opening axis and a respective surface normal enclose an angle greater than zero. Preferably, but not necessarily, the opening axis is parallel to a cross section of the rotary tumbler.

With perforation openings that are aligned obliquely to the circumferential wall, a refrigerant flow can be achieved that deviates from the above described radial flow. This way, a better mixing of the pourable items can be achieved.

In a further preferred embodiment of the cooling device at least one of the perforation openings has an elliptical shape, in particular a circular shape.

Perforation openings shaped in this manner can be manufactured easily. Preferably, the perforation openings are arranged regularly either across the whole circumferential wall or at least over parts of it.

In a further preferred embodiment of the cooling device the rotary tumbler comprises a cross section perpendicular to the axis, wherein the cross section of the rotary tumbler comprises a variation along the axis.

The cross section is defined in a mathematical sense as the area enclosed by the circumferential wall in a plane perpendicular to the axis. Hence, the cross section may vary, if the rotary tumbler is not shaped cylindrically. The variation of the cross section along the axis is preferably a step, that is, an immediate change of the cross section or a change of the cross section realized at a length in direction of the axis being significantly smaller than the length of the tumbler in total. Preferably, the first cooling zone and the second cooling zone are separated by this step.

In a further preferred embodiment, the cooling device further comprises a blower installation outside the rotary tumbler for propelling the refrigerant through the perforation openings in the circumferential wall into the rotary tumbler.

The blower installation preferably comprises at least one fan or similar device. The blower installation can propel the refrigerant either in its liquid or gaseous phase around the rotary tumbler, around at least a part of the rotary tumbler and/or directly into the rotary tumbler through the circumferential wall. By adjusting the power of the blower installation, the cooling rate can be influenced. Therefore, preferably a multitude of fans are comprised in the blower installation. Preferably, guiding elements for deflecting a refrigerant flow such as guiding plates are a part of the blower installation. Preferably, the casing, in which the rotary tumbler is included, is shaped and arranged to influence the flow of the refrigerant. Hence, the casing is a part of the blower installation in a preferred embodiment. Preferably, the casing is thermally isolating.

In a further preferred embodiment the cooling device further comprises at least one spray bar for spraying the refrigerant at least into a part of the rotary tumbler.

The spray bar preferably is a conduit with openings, through which the refrigerant is guided and ejected, respectively. Depending on the position of the spray bar, different amounts of the refrigerant can be introduced into different parts of the rotary tumbler. Preferably, the spray bar is made of a metal, in particular steel, which can withstand the low temperatures relevant for refrigerants such as nitrogen and carbon dioxide. The refrigerant injected into the rotary tumbler through the spray bar can increase a flow rate of the refrigerant. Depending on the properties of the pourable items, in particular the size and weight, a mixing of the pourable items can be enhanced by an increased refrigerant flow rate. If the refrigerant flow is created by fans only, the achievable flow rates are not sufficient in some cases, in particular regarding mixing of the pourable items. With an increased refrigerant flow created by one or more spray bars, the mixing is preferably enhanced.

If a spray bar is arranged near the inlet of the rotary tumbler, it can also be referred to as a "pre-spray bar".

In a further preferred embodiment of the cooling device the at least one spray bar is situated inside the rotary tumbler.

With a spray bar inside the rotary tumbler a very fast and intense cooling effect is achievable, in particular by spraying the refrigerant directly onto the pourable items. Further, the pourable items inside the rotary tumbler may be mixed by the refrigerant. In particular, a spray bar inside the rotary tumbler is advantageous in the case of the previously described closed surface circumferential wall (in the first cooling zone).

In a further preferred embodiment of the cooling device the at least one spray bar is situated outside the rotary tumbler.

The spray bar is preferably used for locally increasing the refrigerant flow outside the rotary tumbler and, hence, through the circumferential wall. In addition to introducing the refrigerant into the cooling device via the spray bar(s), further means may be provided for supplying the refrigerant. These may be other forms of inlets, through which a refrigerant can be injected into the cooling device. That is, in particular, the spray bars are not necessarily the only refrigerant source.

In a further preferred embodiment the cooling device comprises a first of the at least one spray bar for spraying the refrigerant into the first cooling zone and a second of the at least one spray bar for spraying the refrigerant into the second cooling zone.

Having at least one spray bar provided in each cooling zone enhances the possibilities of temperature adjustment in the different cooling zones. Preferably, the refrigerant flow through the spray bars can be adjusted individually for each spray bar.

In a further preferred embodiment the cooling device further comprises an auger for moving the pourable items in a direction along the axis.

The auger is a conveyer that is also known as a "screw conveyer". Preferably, it comprises a screw blade. That is, in particular, the pourable items can be moved actively by the auger from the inlet to the outlet of the rotary tumbler. The speed at which the auger moves the pourable items is preferably adapted to the requirements of the pourable items, in particular with respect to cooling rates. By varying the construction details of the auger along the axis of the rotary tumbler, a spatial variation of the speed at which the pourable items are moved is preferably obtained, although the auger speed can remain unchanged. This is preferably achieved, in particular, by a variation of the spatial periodicity of the screw blade. Preferably, the speed at which the pourable items are moved is different in the first and second cooling zones. The auger is preferably realized by protrusions on the inside surface of the rotary tumbler. In that case, the auger motion can be realized by rotating the rotary tumbler as a whole about its axis.

According to a further aspect of the invention a method is provided for operating a cooling device comprising at least the following steps:
a) moving the pourable items through the rotary tumbler in a direction along the axis,
b) cooling the pourable items at a first cooling rate in the first cooling zone, and
c) cooling the pourable items at a second cooling rate in the second cooling zone, wherein the second cooling rate is different from the first cooling rate.

Preferably, the pourable items are moved through the rotary tumbler by the auger in step a). Thereby, steps b) and c) each are preferably performed simultaneously with step a). Preferably, step c) is performed after step b). The first cooling rate and the second cooling rate are preferably adapted to the requirements of the pourable items. Further, the cooling rates may be influenced by the above described possibilities, in particular, by the size of the perforation openings, but also by fan speeds and/or the amount of refrigerant provided, in particular, through spray bars.

Preferably, when the pourable items are extracted from the rotary tumbler through the outlet, their temperature is below a predetermined maximum value. Preferably, perishable food products such as those comprising milk are cooled below +7°C [degrees Centigrade], in particular below +1°C. Goods that are supposed to be frozen ("Frozen Foods"), e.g. products comprising meat, are preferably cooled below -18°C, in particular below -25°C.

The details and advantages disclosed for the cooling device according to the present invention can be applied to the method of the invention, and vice versa.

It should be noted that the individual features specified in the claims may be combined with one another in any desired technological reasonable manner and form further embodiments of the invention. The specification, in particular in connection with the figures, explains the invention further and specifies particularly preferred embodiments of the invention. Particularly preferred variants of the invention and also the technical field will now be explained in more detail on the basis of the enclosed figures. It should be noted that the exemplary embodiments shown in the figures are not intended to restrict the invention. The figures are schematic and may not be to scale. The figures display:
- Fig. 1:: a schematic perspective view of a first embodiment according to the invention of a cooling device,
- Fig. 2:: a first schematic cross section view of a first cooling zone of the cooling device from fig. 1,
- Fig. 3:: a second schematic cross section view of a second cooling zone of the cooling device from fig. 1 and 2,
- Fig. 4:: a schematic perspective view of a second embodiment of a cooling device with a closed surface in the first cooling zone,
- Fig. 5:: a schematic cross section view of a first cooling zone of the cooling device of fig. 4,
- Fig. 6:: a schematic cross section view of a rotary tumbler with perforation openings aligned perpendicularly to a circumferential wall,
- Fig. 7:: a schematic cross section view of a rotary tumbler with perforation openings aligned obliquely to a circumferential wall,
- Fig. 8:: a schematic view of a section of a circumferential wall with perforation openings having a first shape and orientation,
- Fig. 9:: a schematic view of a section of a circumferential wall with perforation openings having a second shape and orientation,
- Fig. 10:: a schematic view of a section of a circumferential wall with perforation openings having a third shape and orientation, and
- Fig. 11:: a schematic view of a section of a circumferential wall with perforation openings having a fourth shape and orientation.

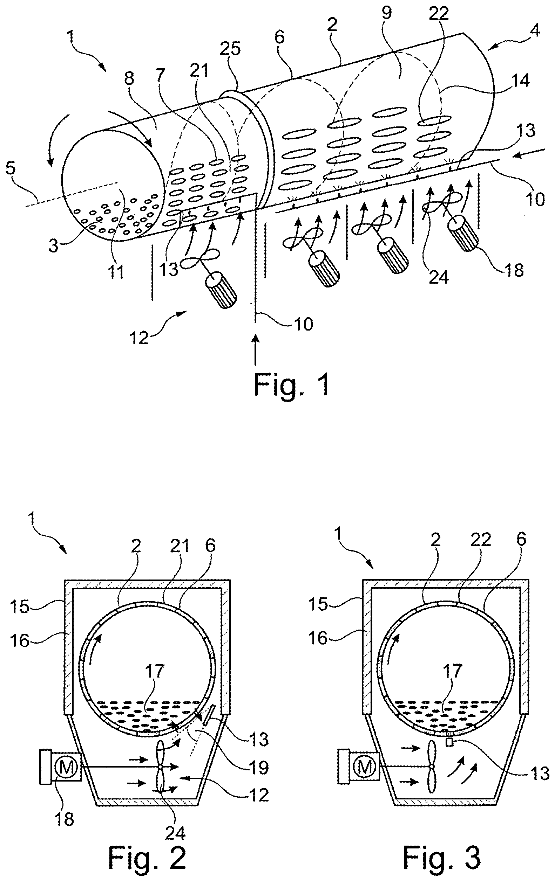

In fig. 1 a cooling device 1 is shown with a rotary tumbler 2 that comprises an inlet 3 and an outlet 4 at the front sides of the rotary tumbler 2. The rotary tumbler 2 further comprises an axis 5 and a circumferential wall 6. The circumferential wall 6 comprises perforation openings 7. In a first cooling zone 8 the perforation openings 7 have a first perforation density 21. In a second cooling zone 9, the perforation openings 7 have a second perforation density 22, which is different from the first perforation density 21. The rotary tumbler 2 has a cross section 11 which varies along the axis 5 in terms of a step 25 in the cross section 11, which separates the first cooling zone 8 from the second cooling zone 9. Inside the rotary tumbler 2, an auger 14 is provided. Further, two spray bars 13 are situated outside the rotary tumbler 2. Each spray bar 13 is connected to a refrigerant intake 10. A blower installation 12 is realized comprising four fans 24. Each fan 24 is connected to a motor 18.

Fig. 2 is a cross section view of the first cooling zone 8 of the cooling device 1 from fig. 1. The rotary tumbler 2 with the circumferential wall 6 is shown. The rotary tumbler 2 is filled at least partly with pourable items 17. The rotary tumbler 2 is enclosed in a casing 15 with a thermal isolation 16. Also, the blower installation 12 is shown by way of a fan 24 and a motor 18. Further, one of the spray bars 13 is shown. It is oriented so that the refrigerant may be sprayed into the rotary tumbler 2 at a spray angle 19. The rotary tumbler 2 has a first perforation density 21 in the first cooling zone 8.

Fig. 3 is a cross section view of the second cooling zone 9 of the cooling device 1 from fig. 1. Elements not mentioned in the following are the same as in fig. 1 and fig. 2. The spray bar 13 is arranged below the rotary tumbler 2. In contrast to the first cooling zone 8, the rotary tumbler 2 has a second perforation density 22 in the second cooling zone 8.

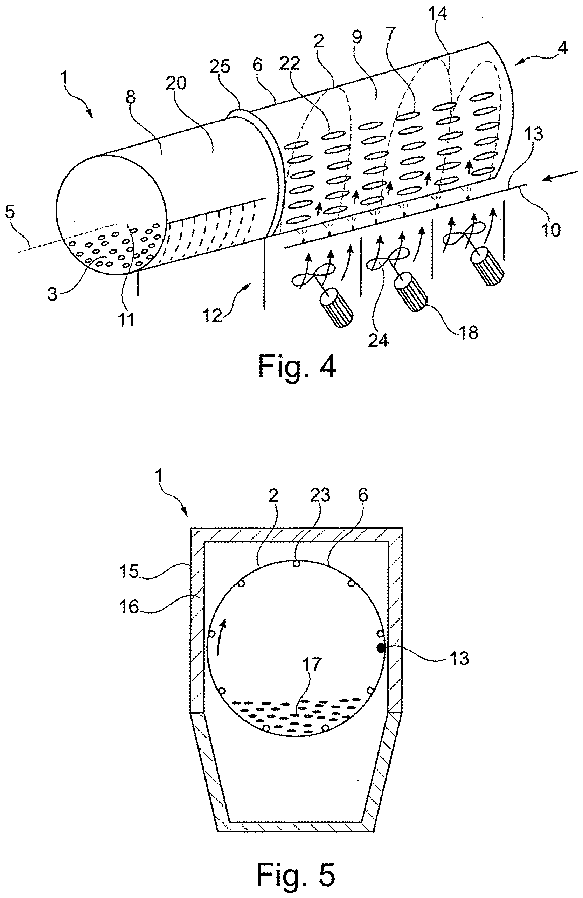

Fig. 4 displays a cooling device 1 with a rotary tumbler 2 that has an inlet 3 and an outlet 4 at its front sides. Further, the rotary tumbler 2 has an axis 5 and a circumferential wall 6. In a first cooling zone 8 the circumferential wall 6 has a closed surface 20. In a second cooling zone 9 the circumferential wall 6 has perforation openings 7 with a second perforation density 22. Further, an auger 14 is shown similar to the one shown in fig. 1. Also, a cross section 11 of the circumferential wall 6 has a step 25 in between the first cooling zone 8 and the second cooling zone 9. A blower installation 12 is shown here, which comprises three fans 24, each connected to a motor 18. In contrast to fig. 1, the blower installation 12 here is only limited to the second cooling zone 9. This is due to the fact that the first cooling zone 8 has the closed surface 20. A spray bar 13 with a refrigerant intake 10 is shown as in fig. 1.

Fig. 5 is a cross section view of the first cooling zone 8 of the cooling device 1 according to fig. 4. A casing 15 with a thermal isolation 16 is shown, in which the rotary tumbler 2 with the circumferential wall 6 is enclosed. Also, pourable items 17 are included in the figure. A spray bar 13 is situated within the rotary tumbler 2. Further, structure elements 23 are included in the figure. The structure elements 23 are rips situated at the inside of the circumferential wall 6.

A cooling device with a rotary tumbler and a method are provided for cooling pourable items, in particular food items, at a multitude of successively applied cooling rates. Therefore, the rotary tumbler is divided into a multitude of cooling zones.

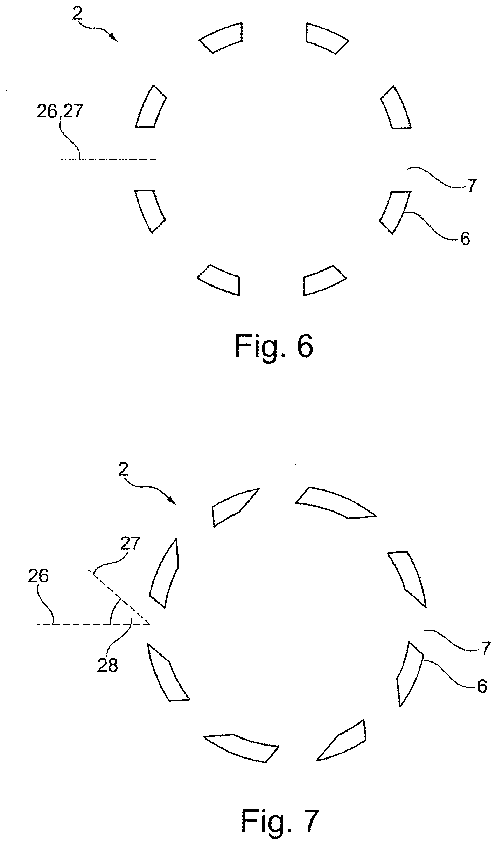

In fig. 6 a cross section of a rotary tumbler 2 is shown. The rotary tumbler 2 has a circumferential wall 6 with perforation openings 7 that are aligned perpendicularly to the circumferential wall. Each of the perforation openings 7 has an opening axis 27, which is shown for one perforation opening 7 only. In this embodiment, the opening axes 27 of all perforation openings 7 are perpendicular to the circumferential wall 6, i.e. a respective surface normal 26 of the circumferential wall 6 is parallel to the opening axis 27. Therein, the respective surface normal 26 is a surface normal in a mathematical sense, which intersects the circumferential wall in a center position of the respective perforation opening 7.

Fig. 7 is similar to fig. 6. Only the perforation openings 7 are aligned obliquely to the circumferential wall 6, i.e. the respective surface normal 26 of the circumferential wall 6 is not parallel to the opening axis 27. This way, the surface normal 26 and the opening axis 27 enclose an angle 28.

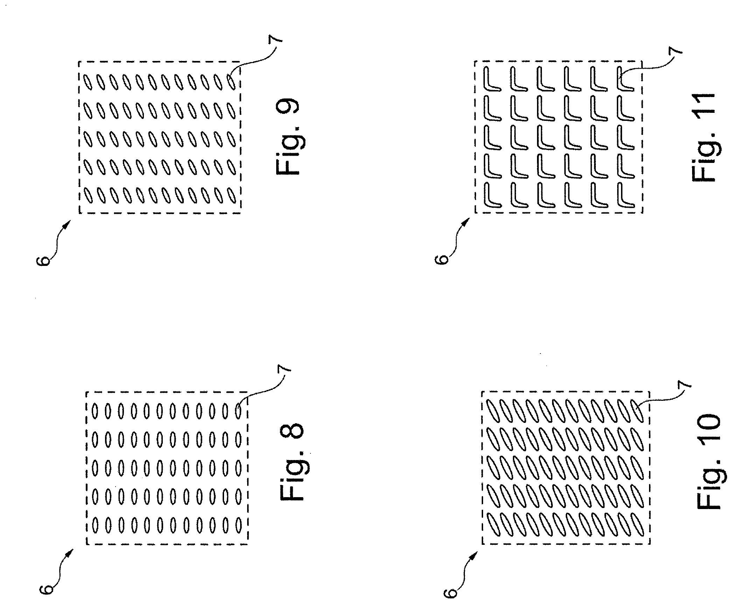

In fig. 8 a section of a surface of a circumferential wall 6 is shown. A multitude of equally shaped perforation openings 7 is arranged uniformly, i.e. with constant spacings in between adjacent perforation openings 7. In this embodiment the perforation openings 7 have an elliptical shape.

Fig. 9 is similar to fig. 8. Only the perforation openings 7 here are oriented in a different way.

Fig. 10 is similar to fig. 9. Only the perforation openings 7 here have a different, but still elliptical, shape.

Fig. 11 is similar to fig. 8 to 10. Only the perforation openings 7 here have an L-shape.

### List of reference numerals

- 1: cooling device
- 2: rotary tumbler
- 3: inlet
- 4: outlet
- 5: axis
- 6: circumferential wall
- 7: perforation opening
- 8: first cooling zone
- 9: second cooling zone
- 10: refrigerant intake
- 11: cross section
- 12: blower installation
- 13: spray bar
- 14: auger
- 15: casing
- 16: thermal isolation
- 17: pourable items
- 18: motor
- 19: spray angle
- 20: closed surface
- 21: first perforation density
- 22: second perforation density
- 23: structure elements
- 24: fan
- 25: step
- 26: surface normal
- 27: opening axis
- 28: angle

## Claims

1. Cooling device (1) for cooling pourable items (17), comprising a rotary tumbler (2) having an inlet (3), an outlet (4), an axis (5) and a circumferential wall (6), wherein at least a part of the circumferential wall (6) has perforation openings (7) for penetration of a refrigerant, **characterized in that** the rotary tumbler (2) is divided into
- at least one first cooling zone (8), wherein the circumferential wall (6) in the first cooling zone (8) has a first penetrability for the refrigerant, and
- at least one second cooling zone (9), wherein the circumferential wall (6) in the second cooling zone has a second penetrability for the refrigerant, which is different from the first penetrability for the refrigerant.

2. Cooling device (1) according to claim 1, wherein the circumferential wall (6) has a closed surface (20) in the first cooling zone (8).

3. Cooling device (1) according to claim 2, wherein the circumferential wall (6) has structure elements (23) on an inside surface in the first cooling zone (8).

4. Cooling device (1) according to claim 1, wherein the circumferential wall (6) has a first perforation density (21) in the first cooling zone (8) and a second perforation density (22) in the second cooling zone (9), which is different from the first perforation density (21).

5. Cooling device (1) according to one of the preceding claims, wherein at least one of the perforation openings (7) has an elliptical shape, in particular a circular shape.

6. Cooling device (1) according to one of the preceding claims, wherein at least one of the perforation openings (7) has an opening axis which is perpendicular to the circumferential wall.

7. Cooling device (1) according to one of the preceding claims, wherein at least one of the perforation openings (7) has an opening axis which is aligned obliquely to the circumferential wall.

8. Cooling device (1) according to one of the preceding claims, wherein the rotary tumbler (2) comprises a cross section (11) perpendicular to the axis (5), and wherein the cross section (11) of the rotary tumbler (2) comprises a variation along the axis (5).

9. Cooling device (1) according to one of the preceding claims, further comprising a blower installation (12) outside the rotary tumbler (2) for propelling the refrigerant through the perforation openings (7) in the circumferential wall (6) into the rotary tumbler (2).

10. Cooling device (1) according to one of the preceding claims, further comprising at least one spray bar (13) for spraying the refrigerant at least into a part of the rotary tumbler (2).

11. Cooling device (1) according to claim 10, wherein at least one spray bar (13) is situated inside the rotary tumbler (2).

12. Cooling device (1) according to one of claims 10 or 11, wherein at least one spray bar (13) is situated outside the rotary tumbler (2).

13. Cooling device (1) according to any of claims 10 to 12, comprising a first of the at least one spray bar (13) for spraying the refrigerant into the first cooling zone (8) and a second of the at least one spray bar (13) for spraying the refrigerant into the second cooling zone (9).

14. Cooling device (1) according to one of the preceding claims, further comprising an auger (14) for moving the pourable items (17) in a direction along the axis (5).

15. Method for operating a cooling device (1) according to one of the preceding claims, comprising at least the following steps:
a) moving the pourable items (17) through the rotary tumbler (2) in a direction along the axis (5),
b) cooling the pourable items (17) at a first cooling rate in the first cooling zone (8), and
c) cooling the pourable items (17) at a second cooling rate in the second cooling zone (9), wherein the second cooling rate is different from the first cooling rate.

## Patentansprüche

1. Kühlvorrichtung (1) zum Kühlen von schüttbaren Gütern (17), umfassend eine Drehtrommel (2) mit einem Einlass (3), einem Auslass (4), einer Achse (5) und einer Umfangswand (6), wobei zumindest ein Teil der Umfangswand (6) Perforationsöffnungen (7) zum Eindringen eines Kältemittels aufweist, **dadurch gekennzeichnet, dass** die Drehtrommel (2) unterteilt ist in
- mindestens eine erste Kühlzone (8), wobei die Umfangswand (6) in der ersten Kühlzone (8) eine erste Durchlässigkeit für das Kältemittel aufweist, und
- mindestens eine zweite Kühlzone (9), wobei die Umfangswand (6) in der zweiten Kühlzone eine zweite Durchlässigkeit für das Kältemittel aufweist, die sich von der ersten Durchlässigkeit für das Kältemittel unterscheidet.

2. Kühlvorrichtung (1) nach Anspruch 1, wobei die Umfangswand (6) in der ersten Kühlzone (8) eine geschlossene Oberfläche (20) aufweist.

3. Kühlvorrichtung (1) nach Anspruch 2, wobei die Umfangswand (6) Strukturelemente (23) auf einer Innenfläche in der ersten Kühlzone (8) aufweist.

4. Kühlvorrichtung (1) nach Anspruch 1, wobei die Umfangswand (6) in der ersten Kühlzone (8) eine erste Perforationsdichte (21) und in der zweiten Kühlzone (9) eine zweite Perforationsdichte (22) aufweist, die sich von der ersten Perforationsdichte (21) unterscheidet.

5. Kühlvorrichtung (1) nach einem der vorhergehenden Ansprüche, wobei mindestens eine der Perforationsöffnungen (7) eine elliptische Form, insbesondere eine kreisrunde Form, aufweist.

6. Kühlvorrichtung (1) nach einem der vorhergehenden Ansprüche, wobei mindestens eine der Perforationsöffnungen (7) eine Öffnungsachse aufweist, die senkrecht zu der Umfangswand ist.

7. Kühlvorrichtung (1) nach einem der vorhergehenden Ansprüche, wobei mindestens eine der Perforationsöffnungen (7) eine Öffnungsachse aufweist, die schräg zur Umfangswand ausgerichtet ist.

8. Kühlvorrichtung (1) nach einem der vorhergehenden Ansprüche, wobei die Drehtrommel (2) einen Querschnitt (11) senkrecht zur Achse (5) aufweist, und wobei der Querschnitt (11) der Drehtrommel (2) eine Variation entlang der Achse (5) aufweist.

9. Kühlvorrichtung (1) nach einem der vorhergehenden Ansprüche, ferner umfassend eine Gebläseeinrichtung (12) außerhalb der Drehtrommel (2) zum Antreiben des Kältemittels durch die Perforationsöffnungen (7) in der Umfangswand (6) in die Drehtrommel (2).

10. Kühlvorrichtung (1) nach einem der vorhergehenden Ansprüche, ferner umfassend mindestens eine Sprühleiste (13) zum Sprühen des Kältemittels zumindest in einen Teil der Drehtrommel (2).

11. Kühlvorrichtung (1) nach Anspruch 10, wobei mindestens eine Sprühleiste (13) in der Drehtrommel (2) angeordnet ist.

12. Kühlvorrichtung (1) nach einem der Ansprüche 10 oder 11, wobei mindestens eine Sprühleiste (13) außerhalb der Drehtrommel (2) angeordnet ist.

13. Kühlvorrichtung (1) nach einem der Ansprüche 10 bis 12, umfassend eine erste der mindestens einen Sprühleiste (13) zum Sprühen des Kältemittels in die erste Kühlzone (8) und eine zweite der mindestens einen Sprühleiste (13) zum Sprühen des Kältemittels in die zweite Kühlzone (9).

14. Kühlvorrichtung (1) nach einem der vorhergehenden Ansprüche, ferner umfassend eine Schnecke (14) zum Bewegen der schüttbaren Güter (17) in einer Richtung entlang der Achse (5).

15. Verfahren zum Betreiben einer Kühlvorrichtung (1) nach einem der vorhergehenden Ansprüche, umfassend mindestens die folgenden Schritte:
a) Bewegen der schüttbaren Güter (17) durch die Drehtrommel (2) in einer Richtung entlang der Achse (5),
b) Kühlen der schüttbaren Güter (17) mit einer ersten Kühlrate in der ersten Kühlzone (8), und
c) Kühlen der schüttbaren Güter (17) mit einer zweiten Kühlrate in der zweiten Kühlzone (9), wobei sich die zweite Kühlrate von der ersten Kühlrate unterscheidet.

## Revendications

1. Dispositif de refroidissement (1) destiné à refroidir des articles versables (17), comprenant un cylindre rotatif (2) ayant une entrée (3), une sortie (4), un axe (5) et une paroi circonférentielle (6), dans lequel au moins une partie de la paroi circonférentielle (6) a des ouvertures de perforation (7) pour la pénétration d'un réfrigérant, **caractérisé en ce que** le cylindre rotatif (2) est divisé en
- au moins une première zone de refroidissement (8), dans lequel la paroi circonférentielle (6) dans la première zone de refroidissement (8) a une première pénétrabilité pour le réfrigérant, et
- au moins une seconde zone de refroidissement (9), dans lequel la paroi circonférentielle (6) dans la seconde zone de refroidissement a une seconde pénétrabilité pour le réfrigérant, qui est différente de la première pénétrabilité pour le réfrigérant.

2. Dispositif de refroidissement (1) selon la revendication 1, dans lequel la paroi circonférentielle (6) a une surface fermée (20) dans la première zone de refroidissement (8).

3. Dispositif de refroidissement (1) selon la revendication 2, dans lequel la paroi circonférentielle (6) a des éléments de structure (23) sur une surface intérieure dans la première zone de refroidissement (8).

4. Dispositif de refroidissement (1) selon la revendication 1, dans lequel la paroi circonférentielle (6) a une première densité de perforations (21) dans la première zone de refroidissement (8) et une seconde densité de perforations (22) dans la seconde zone de refroidissement (9), qui est différente de la première densité de perforations (21).

5. Dispositif de refroidissement (1) selon l'une des revendications précédentes, dans lequel au moins une des ouvertures de perforation (7) a une forme elliptique, en particulier une forme circulaire.

6. Dispositif de refroidissement (1) selon l'une des revendications précédentes, dans lequel au moins une des ouvertures de perforation (7) a un axe d'ouverture qui est perpendiculaire à la paroi circonférentielle.

7. Dispositif de refroidissement (1) selon l'une des revendications précédentes, dans lequel au moins une des ouvertures de perforation (7) a un axe d'ouverture qui est aligné obliquement par rapport à la paroi circonférentielle.

8. Dispositif de refroidissement (1) selon l'une des revendications précédentes, dans lequel le cylindre rotatif (2) comprend une section transversale (11) perpendiculaire à l'axe (5), et dans lequel la section transversale (11) du cylindre rotatif (2) comprend une variation le long de l'axe (5).

9. Dispositif de refroidissement (1) selon l'une des revendications précédentes, comprenant en outre une installation soufflante (12) à l'extérieur du cylindre rotatif (2) pour projeter le réfrigérant, à travers les ouvertures de perforation (7) dans la paroi circonférentielle (6), dans le cylindre rotatif (2).

10. Dispositif de refroidissement (1) selon l'une des revendications précédentes, comprenant en outre au moins une barre de pulvérisation (13) pour pulvériser le réfrigérant au moins dans une partie du cylindre rotatif (2).

11. Dispositif de refroidissement (1) selon la revendication 10, dans lequel au moins une barre de pulvérisation (13) est située à l'intérieur du cylindre rotatif (2).

12. Dispositif de refroidissement (1) selon l'une des revendications 10 ou 11, dans lequel au moins une barre de pulvérisation (13) est située à l'extérieur du cylindre rotatif (2).

13. Dispositif de refroidissement (1) selon l'une quelconque des revendications 10 à 12, comprenant une première de l'au moins une barre de pulvérisation (13) pour pulvériser le réfrigérant dans la première zone de refroidissement (8) et une seconde de l'au moins une barre de pulvérisation (13) pour pulvériser le réfrigérant dans la seconde zone de refroidissement (9).

14. Dispositif de refroidissement (1) selon l'une des revendications précédentes, comprenant en outre une vis sans fin (14) pour déplacer les articles versables (17) dans une direction le long de l'axe (5).

15. Procédé pour faire fonctionner un dispositif de refroidissement (1) selon l'une des revendications précédentes, comprenant au moins les étapes suivantes :
a) le déplacement des articles versables (17) à travers le cylindre rotatif (2) dans une direction le long de l'axe (5),
b) le refroidissement des articles versables (17) à une première vitesse de refroidissement dans la première zone de refroidissement (8), et
c) le refroidissement des articles versables (17) à une seconde vitesse de refroidissement dans la seconde zone de refroidissement (9), dans lequel la seconde vitesse de refroidissement est différente de la première vitesse de refroidissement.
